# EUROPEAN PATENT APPLICATION

(11) **EP 4 670 864 A1**
(43) Date of publication of application: **31.12.2025**
(21) Application number: 24824740.5
(22) Date of filing: 19.11.2024
(51) Int. Cl.: B21D 5/04, B21D 43/00

(54) **BENDING APPARATUS AND FLOATING BENDING DEVICE THEREOF**

(30) Priority: 11.05.2024 CN 202410580822
(71) Applicant: Wuxi Lead Intelligent Equipment Co., Ltd., Wuxi, Jiangsu 214028 (CN)
(72) Inventor: ZHOU, Lei, Wuxi, Jiangsu 214028 (CN); XIA, Xin, Wuxi, Jiangsu 214028 (CN)
(74) Representative: Rau, Schneck & Hübner Patentanwälte Rechtsanwälte PartGmbB
(86) International application number: PCT/CN2024/132843
(87) International publication number: WO 2025/236579

(57) **Abstract**

Disclosed are a bending device and a floating bending apparatus. The bending device includes: a movable member, a fixed member and a pressure applying member. The body part of the to-be-bent workpiece is located between the pressure applying member and the bending part, while the connection part of the to-be-bent workpiece is located on one side of the fixed member close to the pressure applying member. During the bending process, the pressure applying member moves along the first direction to fix the body part between the pressure applying member and the bending part, achieving the positioning of the to-be-bent workpiece in the bending device; subsequently, the pressure applying member continues to move along the first direction such that the body part moves together with the bending part along the first direction, while the connection part is bent under the constraint of the fixed member.

## Description

### CROSS-REFERENCE TO RELATED APPLICATIONS

The present disclosure claims priority to a Chinese patent application No. 202410580822.5 filed with the CNIPA on May 11, 2024 and entitled "BENDING DEVICE AND FLOATING BENDING APPARATUS", which is hereby incorporated by reference in its entirety.

### TECHNICAL FIELD

The present disclosure relates to a bending device and a floating bending apparatus.

### BACKGROUND

During the bending process of a to-be-bent workpiece, it is essential to ensure both bending efficiency and precision. However, existing bending devices typically require multiple steps to complete the bending operation, resulting in low production efficiency. Additionally, these devices often suffer from low bending accuracy and a tendency for the workpiece to be stretched and damaged during the bending process, leading to a low yield rate.

### SUMMARY

In light of the above, there is a need to provide a bending device and a floating bending apparatus that address the issues of low efficiency and accuracy associated with the prior art bending devices, thereby improving these deficiencies.

An aspect of the present disclosure provides a bending device configured for bending a to-be-bent workpiece including a body part and a connection part, the bending device includes: a movable member movable along a first direction and including a bending part; a fixed member provided on one side of the bending part along a second direction, the second direction being perpendicular to the first direction; and a pressure applying member provided corresponding to the bending part along the first direction, the body part being provided between the pressure applying member and the bending part, the connection part being provided on one side of the fixed member close to the pressure applying member.

On one hand, during the bending process, the pressure applying member moves along the first direction to apply pressure to the bending part, fixing the body part between the pressure applying member and the bending part, thus achieving the positioning of the to-be-bent workpiece in bending device. On the other hand, as the pressure applying member continues to move along the first direction, it causes the body part to move together with the bending part along the first direction, while the connection part is bent under the restriction of the fixed member. Additionally, the connection part of the to-be-bent workpiece acts as a free end, allowing it to extend during the bending process and thereby release stress. This prevents cracks from forming in the to-be-bent workpiece during the bending process thereby improving the yield rate.

In some embodiments, a side surface of the fixed member close to the bending part is a first abutting surface, a surface of the pressure applying member close to the fixed member is a second abutting surface, and the first abutting surface and the second abutting surface are spaced apart.

In some embodiments, an angle between the first abutting surface and the second direction is greater than or equal to 90°.

In some embodiments, the shortest distance between the first abutting surface and the second abutting surface is greater than or equal to a thickness of the connection part.

In some embodiments, the fixed member is recessed along the first direction to form a first accommodation groove, and the connection part is accommodated in the first accommodation groove.

In some embodiments, the first accommodation groove is a recessed part that tapers along the first direction.

In some embodiments, the bending part is recessed along the first direction to form a second accommodation groove, and the body part is accommodated in the second accommodation groove.

In some embodiments, the second accommodation groove is a recessed part that tapers along the first direction.

In some embodiments, along the second direction, a bottom surface of the first accommodation groove and that of the second accommodation groove are coplanar.

In some embodiments, there is a circular arc transition between a bottom surface of the first accommodation groove and the first abutting surface.

In some embodiments, the bending device further includes a base spaced apart along the first direction from a side of the movable member facing away from the pressure applying member, with an elastic member provided between the base and the movable member.

In some embodiments, the elastic member is a spring, one end of the spring abuts against the base, and the other end thereof abuts against the movable member.

In some embodiments, the bending device further includes a rail provided along the first direction, one end of the rail is fixedly connected to the base, and the other end thereof is slidably connected to the movable member.

In some embodiments, the bending device further includes a linear bearing, through which the movable member is slidably connected to the rail.

In some embodiments, the bending device further includes a negative pressure member in communication with a surface of the bending part close to the pressure applying member.

In some embodiments, the movable member is further provided with a communicating passage, one end of the communicating passage is in communication with the negative pressure member, and the other end thereof is in communication with the surface of the bending part close to the pressure applying member.

In some embodiments, the bending device further includes a limiting member, which is configured to limit movement of the movable member away from the first direction.

In some embodiments, the movable member further includes a mount part, which is provided with a clearance hole accommodating the fixed member.

Another aspect of the present disclosure provides a floating bending apparatus, which includes the bending device and a floating device, and the floating device is connected to the pressure applying member.

Regarding the above bending device and floating bending apparatus, during the bending process: the body part of the to-be-bent workpiece acts as a fixed end, and is fixed between the pressure applying member and the bending part, achieving precise positioning of the to-be-bent workpiece and ensuring bending accuracy. Additionally, the connection part of the to-be-bent workpiece serves as a free end, allowing it to extend during the bending process. This facilitates stress release, preventing cracks from forming in the to-be-bent workpiece during the bending process, thereby improving the yield rate.

### BRIEF DESCRIPTION OF THE DRAWINGS

FIG. 1 is a schematic structural illustration of a floating bending apparatus according to an embodiment of the present disclosure;
FIG. 2 is a schematic structural illustration of the bending device before bending, with the pressure applying member removed, according to an embodiment of the present disclosure;
FIG. 3 is a schematic structural illustration of the to-be-bent workpiece after being bent, according to an embodiment of the present disclosure;
FIG. 4 is a front view of FIG. 2;
FIG. 5 is a sectional view along A-A of FIG. 4;
FIG. 6 is a partially enlarged view of position C in FIG. 5;
FIG. 7 is a schematic structural illustration of the bending device after bending, with the pressure applying member removed, according to an embodiment of the present disclosure;
FIG. 8 is a front view of FIG. 7;
FIG. 9 is a sectional view along B-B of FIG. 8.

### Description of reference signs:

1 bending device; 11 movable member, 111 bending part, 112 second accommodation groove, 113 mount part, 114 clearance hole, 115 communicating passage; 12 fixed member, 121 first abutting surface, 122 first accommodation groove; 13 pressure applying member, 131 second abutting surface; 14 base; 15 elastic member; 16 rail; 17 linear bearing; 18 negative pressure member; 19 limiting member, 191 first limiting part, 192 second limiting part;
2 to-be-bent workpiece; 21 body part, 22 connection part;
3 floating device;
X first direction;
Y second direction;
a angle between the first abutting surface and the second direction;
d shortest distance between the first abutting surface and the second abutting surface.

### DETAILED DESCRIPTION

To facilitate a better understanding of the above objects, features and advantages of the present disclosure, specific embodiments of the present disclosure will be described in detail below with reference to the accompanying drawings. In a following description, numerous specific details are set forth in order to provide a thorough understanding of the present disclosure. However, the present disclosure can be implemented in many other ways different from those described here, and those skilled in the art can make similar improvements without violating a connotation of the present disclosure. Therefore, the present disclosure is not limited by the specific embodiments disclosed below.

In the description of the present disclosure, it should be understood that, an orientation or positional relationship indicated by terms "center", "longitudinal", "lateral", "length", "width", "thickness", "upper", "lower", "front", "back", "left", "right", "vertical", "horizontal", "top", "bottom", inner", "outer", "clockwise", "counterclockwise", "axial", "radial", "circumferential" is based on the orientation or positional relationship shown in the accompanying drawings, and is only for convenience of describing the present disclosure and simplifying the description, rather than indicating or implying that a device or element referred to must be provided with a particular orientation, be constructed and operate in a particular orientation, and therefore should not be understood as a limitation to the present disclosure.

In addition, terms "first" and "second" are only used for descriptive purposes and should not be understood as indicating or implying relative importance or implying a number of indicated technical features. Therefore, a feature delimited with "first", "second" may expressly or implicitly include at least one of those features. In a description of the present disclosure, "a plurality" means at least two, such as two, three, etc., unless expressly and specifically defined otherwise.

In the present disclosure, unless expressly specified and limited otherwise, terms "installed", "communicated", "connected", "fixed" and other terms should be interpreted in a broad sense, for example, it can be a fixed connection, a detachable connection, or an integrated; it can be a mechanical connection or an electrical connection; it can be directly connected, or indirectly connected through an intermediate medium, and it can be an internal communication between two elements or an interaction relationship between the two elements, unless otherwise explicitly defined. For those of ordinary skill in the art, specific meanings of the above terms in the present disclosure can be understood according to specific situations.

In the present disclosure, unless expressly stated and defined otherwise, a first feature "on" or "under" a second feature may be that the first feature is in direct contact with the second feature, or the first feature and the second feature are indirectly contacted through an intermediary. In addition, the first feature being "above", "over" and "on" the second feature may mean that the first feature is directly above or obliquely above the second feature, or simply means that the first feature is on a higher horizontal level than the second feature. The first feature being "below", "under" and "beneath" the second feature may mean that the first feature is directly below or obliquely below the second feature, or simply means that the first feature is on a lower horizontal level than the second feature.

It should be noted that when an element is referred to as being "fixed to" or "arranged on" another element, it can be directly on another element, or there might be an intervening element between them. When an element is referred to as being "connected" to another element, it can be directly connected to another element or intervening elements may also be present. Terms "vertical", "horizontal", "upper", "lower", "left", "right" and similar expressions are used here only for illustration purposes rather than indicating the sole implementation.

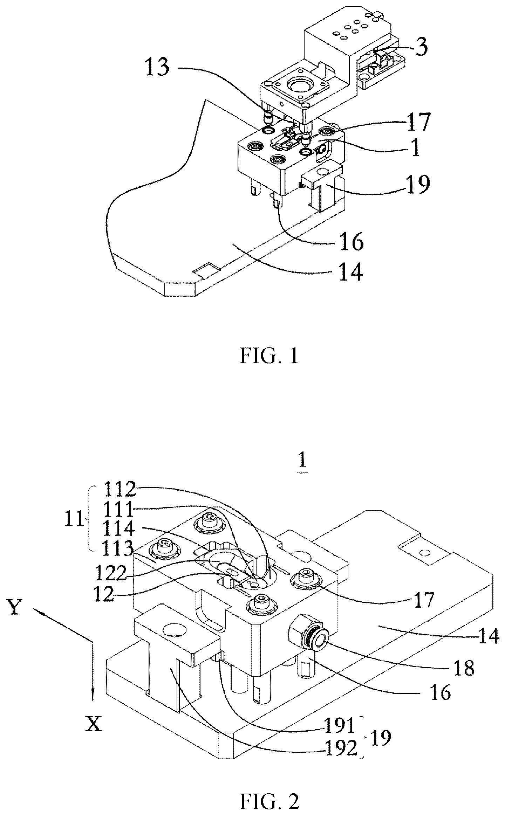

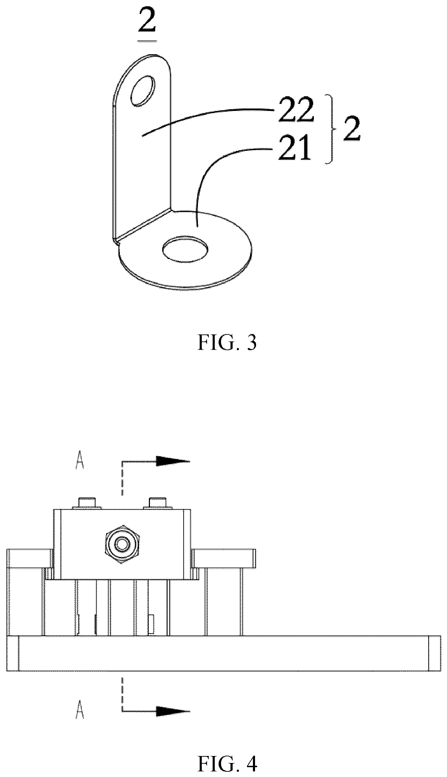

For a clearer understanding of the embodiments of the present disclosure, the embodiments of the present disclosure are described in detail below in conjunction with FIGS. 1 to 9.

As shown in FIGS. 1 to 9, an aspect of the present disclosure provides a bending device 1 configured for bending a to-be-bent workpiece 2, which includes a body part 21 and a connection part 22. The bending device 1 includes a movable member 11, a fixed member 12 and a pressure applying member 13. The movable member 11 is movable along a first direction X and includes a bending part 111. The fixed member 12 is provided on one side of the bending part 111 along a second direction Y, which is perpendicular to the first direction X. The pressure applying member 13 is provided corresponding to the bending part 111 along the first direction X, the body part 21 is provided between the pressure applying member 13 and the bending part 111, and the connection part 22 is provided on one side of the fixed member 12 close to the pressure applying member 13.

The to-be-bent workpiece 2 may be any part that needs bending, and may be made of metal, alloy, etc., which is not limited in the present disclosure. The shape of the to-be-bent workpiece 2 is also not limited in the present disclosure. For example, in some embodiments, the to-be-bent workpiece 2 may be a connection piece in a battery, through which the battery is connected to an external electrical device or other batteries, thereby outputting electrical energy or forming a series-parallel circuit. The to-be-bent workpiece 2 includes the body part 21 and the connection part 22. For example, in some embodiments, the to-be-bent workpiece 2 is a connection piece in a battery, the body part 21 of the to-be-bent workpiece 2 is in communication with the cell in the battery, while the connection part 22 is in communication with an output terminal (positive or negative terminal) of the battery, thereby transmitting the electrical energy from the cell to the positive or negative terminals of the battery.

The movable member 11 may move along the first direction X, and the movement of the movable member 11 along the first direction X may be achieved through a slide rail, or through a rack in a gear-rack mechanism. The movable member 11 includes the bending part 111, which is the component directly subjected to the pressure from the pressure applying member 13 during the bending process.

The second direction Y is perpendicular to the first direction X, meaning that the second direction Y may be a direction pointed to by any straight line located on a plane perpendicular to the first direction X. The fixed member 12 is provided on one side of the bending part 111 along the second direction Y, i.e., which means it can be located anywhere around the bending part 111 on the plane perpendicular to the first direction X. The fixed member 12 refers to a component that remains stationary relative to movable member 11 during the bending process: it may be a part connected to the frame or integrated into the frame.

The pressure applying member 13 is provided corresponding to the bending part 11 along the first direction X. During the bending process, the pressure applying member 13 may apply pressure to the bending part 111 along the first direction X, driving the movable member 11 to move along the first direction X. In some embodiments, the pressure applying member 13 is in driving connection with an electric cylinder, a pneumatic cylinder, a hydraulic cylinder, or other actuator, providing power for the pressure applying member 13.

The body part 21 is provided between the pressure applying member 13 and the bending part 111, which causes that, during the bending process, the movement of the pressure applying member 13 along the first direction X fixes the body part 21 of the to-be-bent workpiece 2 between the pressure applying member 13 and the bending part 111, achieving positioning of the to-be-bent workpiece 2. The connection part 22 is provided on the side of the fixed member 12 close to the pressure applying member 13, i.e., the fixed member 12 may restrict the movement of the connection part 22 along the first direction X, ensuring that when the body part 21 moves in the first direction X, the connection part 22 is bent under the constraint of the fixed member 12.

On one hand, during the bending process, the pressure applying member 13 moves along the first direction X to apply pressure to the bending part 111, fixing the body part 21 between the pressure applying member 13 and the bending part 111, thus achieving positioning of the to-be-bent workpiece 2 within the bending device 1. On the other hand, as the pressure applying member 13 continues to move along the first direction X, it causes the body part 21 to move together with the bending part 111 along the first direction X, while the connection part 22 is bent under the restriction of the fixed member 12. Additionally, during the bending process, the connection part 22 of the to-be-bent workpiece 2 acts as a free end, so that during the bending process, the connection part 22 of the to-be-bent workpiece 2 is movable and extends to release stress, preventing cracks from forming in the to-be-bent workpiece 2 during the bending process, thereby improving the yield rate.

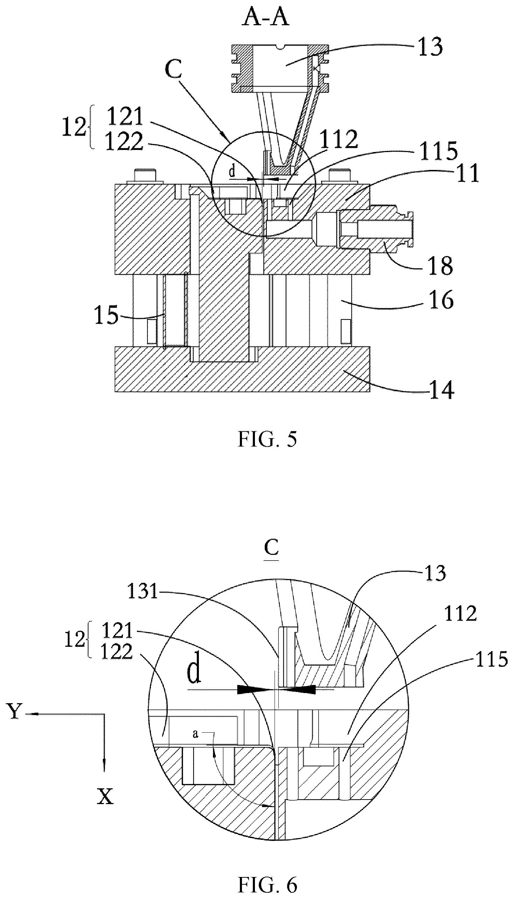

As shown in FIG. 5 and FIG. 6, in some embodiments, a side surface of the fixed member 12 close to the bending part 111 forms the first abutting surface 121, a surface of the pressure applying member 13 close to the fixed member 12 forms the second abutting surface 131. The first abutting surface 121 and the second abutting surface 131 are spaced apart.

The first abutting surface 121 and the second abutting surface 131 are spaced apart, so that the spacing therebetween forms a bending passage for accommodating the connection part 22. During the bending process, the connection part 22 slides into the bending passage (formed between the first abutting surface 121 and the second abutting surface 131) from the surface of the fixed member 12 close to the pressure applying member 13, and is bent under the restriction provided by the first abutting surface 121 and the second abutting surface 131.

The first abutting surface 121 and the second abutting surface 131 are spaced apart, and may be either parallel or non-parallel. In some embodiments, they are provided to be parallel. Since the connection part 22 is typically a plate-like structure with uniform thickness, a parallel arrangement of the first abutting surface 121 and the second abutting surface 131 increases the contact area between the first abutting surface 121, the second abutting surface 131, and the connection part 22, enhancing the effectiveness of the bending operation.

As shown in FIG. 5 and FIG. 6, in some embodiments, the angle "a" between the first abutting surface 121 and the second direction Y is greater than or equal to 90°.

Since the angle "a" between the first abutting surface 121 and the second direction Y is equal to the bending angle between the body part 21 and the connection part 22, the angle "a" determines the bending angle between the body part 21 and the connection part 22 after the to-be-bent workpiece 2 is bent. For example, if the angle "a" between the first abutting surface 121 and the second direction Y is 120°, then the bending angle between the body part 21 and the connection part 22 is also 120°.

The angle a between the first abutting surface 121 and the second direction Y is greater than or equal to 90°, ensuring that the angle between the first abutting surface 121 and the surface of the fixed member 12 close to the pressure applying member 13 is either a right angle or an obtuse angle. This facilitates the sliding of the connection part 22 of the to-be-bent workpiece 2 into the bending passage without forming a sharp angle that could puncture or damage the connection part 22.

As shown in FIG. 5 and FIG. 6, in some embodiments, the shortest distance d between the first abutting surface 121 and the second abutting surface 131 is greater than or equal to the thickness of the connection part 22.

The shortest distance d between the first abutting surface 121 and the second abutting surface 131 being greater than or equal to the thickness of the connection part 22 serves two purposes: on one hand, it ensures that the connection part 22 can enter the bending passage formed between the first abutting surface 121 and the second abutting surface 131, allowing for successful bending; on the other hand, it reduces the friction between the connection part 22 and the two abutting surfaces when entering the bending passage formed between the first abutting surface 121 and the second abutting surface 131, improving product quality.

As shown in FIG. 2, FIG. 5, FIG. 7, and FIG. 9, in some embodiments, the fixed member 12 is recessed along the first direction X to form a first accommodation groove 122, within which the connection part 22 is accommodated.

The provision of the first accommodation groove 122 for accommodating the connection part 22 serves two purposes: on one hand, it is possible to achieve positioning of the connection part 22 before bending, ensuring bending accuracy; on the other hand, it is possible that during the bending process, the first accommodation groove 122 may limit the connection part 22 to ensure that the connection part accurately slides into the bending passage formed between the first abutting surface 121 and the second abutting surface 131, thereby increasing the yield rate.

As shown in FIG. 2, FIG. 5, FIG. 7, and FIG. 9, in some embodiments, the first accommodation groove 122 is a recessed part that tapers along the first direction.

The first accommodation groove 122 is a recessed part that tapers along the first direction, that is, the first accommodation groove 122 is a groove with a progressively larger opening, which may form an inclined guiding slope to guide the connection part 22 into the first accommodation groove 122, facilitating the positioning of the connection part 22.

As shown in FIG. 2 and FIG. 5, in some embodiments, the bending part 111 is recessed along the first direction X to form a second accommodation groove 112, within which the body part 21 is accommodated.

Similarly, by providing the second accommodation groove 112 to accommodate the body part 21, it is possible to achieve positioning of the body part 21, ensuring bending accuracy.

As shown in FIG. 2 and FIG. 5, in some embodiments, the second accommodation groove 112 is a recessed part that tapers along the first direction.

The second accommodation groove 112 is a recessed part that tapers along the first direction, that is, the second accommodation groove 112 is a groove with a progressively larger opening, which may form an inclined guiding slope to guide the body part 21 into the second accommodation groove 112, facilitating the positioning of the body part 21.

As shown in FIG. 5 to FIG. 9, in some embodiments, along the second direction Y, a bottom surface of the first accommodation groove 122 is coplanar with that of the second accommodation groove 112.

In some embodiments, for ease of manufacture and simplification of the manufacturing process, the body part 21 and the connection part 22 of the to-be-bent workpiece 2 usually have the same thickness. At this time, by providing the bottom surface of the first accommodation groove 122 and that of the second accommodation groove 112 in the same plane along the second direction Y, this ensures: on one hand, it is possible to ensure that when the body part 21 is in contact with the bottom surface of the second accommodation groove 112, the connection part 22 is also in contact with the bottom surface of the first accommodation groove 122, ensuring the positioning accuracy of the to-be-bent workpiece 2; on the other hand, it is possible to prevent that when the pressure applying member 13 applies pressure to movable member 12, the to-be-bent workpiece 2 experiences warping or misalignment due to the body part 21 not being in contact with the bottom surface of the second accommodation groove 112 or the connection part 22 not being in contact with the bottom surface of the first accommodation groove 122 to affect the positioning accuracy and bending quality of the to-be-bent workpiece 2.

As shown in FIG. 5 and FIG. 6, in some embodiments, there is a circular arc transition between a bottom surface of the first accommodation groove 122 and the first abutting surface 121.

The circular arc transition between the bottom surface of the first accommodation groove 122 and the first abutting surface 121 ensures that: on one hand, the connection part 22 can smoothly slide into the bending passage formed between the first abutting surface 121 and the second abutting surface 131. On the other hand, by providing the edge formed between the bottom surface of the first accommodation groove 122 and the first abutting surface 121 as a circular arc transition, it is not only reduces stress concentration on the edge to prevent the edge from cracking which could impact the bending quality, but also reduces the force exerted on the connection part 22 by the edge, thereby preventing the connection part 22 from being damaged due to excessive force.

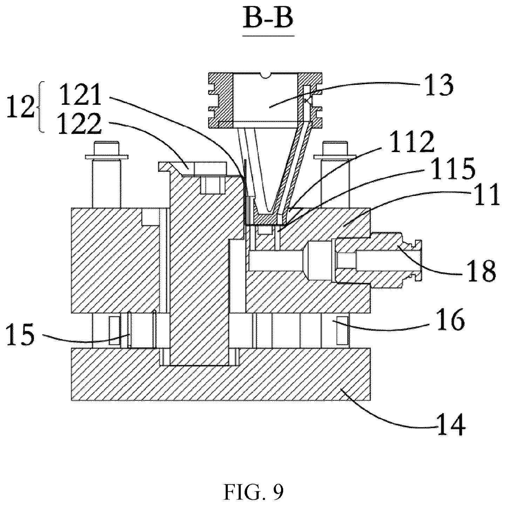

As shown in FIG. 5 and FIG. 9, in some embodiments, the bending device 1 further includes a base 14 spaced apart along the first direction X from a side of the movable member 11 facing away from the pressure applying member 13, with an elastic member 15 provided between the base 14 and the movable member 11.

The base 14 may be a portion of the frame or a part fixedly connected to the frame, with no restrictions on the shape or material of the base 14.

The elastic member 15 refers to a part made of elastic material, which may be a spring or a part made of rubber material.

By providing the elastic member 15 between the base 14 and the movable member 11, on one hand, the elastic member 15 serves as a cushion to prevent the bending device 1 from being damaged due to excessive pressure applied by the pressure applying member 13, and on the other hand, the compressed elastic member 15 provides an elastic force away from the first direction X to the movable member 11, allowing it to return to its initial position, preparing for the next bending.

As shown in FIG. 5 and FIG. 9, in some embodiments, the elastic member 15 is a spring, one end of the spring abuts against the base 14, and the other end thereof abuts against the movable member 11.

Similarly, the spring on one hand serves as a cushion, and on the other hand provides an elastic force to the movable member 11 to return it to its initial position.

As shown in FIG. 2 to FIG. 9, in some embodiments, the bending device 1 further includes a rail 16 provided along the first direction X, one end of the rail 16 is fixedly connected to the base 14, and the other end thereof is slidably connected to the movable member 11.

One end of the rail 16 is fixedly connected to the base 14. The term "fixedly connected" means that there is no relative motion between the rail 16 and the base 14. This fixed connection between the rail 16 and the base 14 may be achieved through non-detachable connections such as welding or riveting, or through detachable connections such as snap-fit or bolted connections.

The other end of the rail 16 is slidably connected to the movable member 11. In some embodiments, a slider may be provided on the movable member 11, achieving the sliding connection between the rail 16 and the movable member 11 via the slider and the rail 16. In some embodiments, a through-hole may be provided on the movable member 11, which sleeves over the rail 16 to achieve the sliding connection between the rail 16 and the movable member 11.

The rail 16 may be cylindrical or rectangular, which is not limited in the present disclosure. The rail 16 is provided along the first direction X, allowing the movable member 11 to move along the first direction X under the constraint of the rail 16. In some embodiments, there is provided a plurality of rails 16, and the plurality of rails 16 may improve the constraining effect on the movable member 11 along the first direction X, thereby increasing the operational stability of the bending device 1.

In some embodiments, the elastic member 15 may be sleeved within the rail 16, thereby limiting movement of the elastic member 15 except along the first direction X, and thus achieve its positioning. Of course, in some embodiments, grooves may be provided on two opposing surfaces of the movable member 11 and/or the base 14, with at least one end of the elastic member 15 accommodated in the grooves to achieve its positioning.

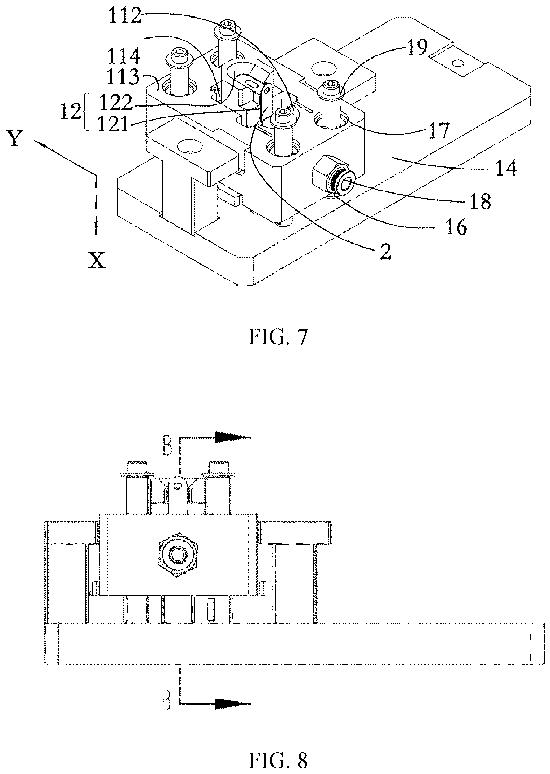

As shown in FIG. 2 and FIG. 7, in some embodiments, the bending device 1 further includes a linear bearing 17, through which the movable member 11 is slidably connected to the rail 16.

The linear bearing 17 features low friction and high stability. By slidably connecting the movable member 11 to the rail 16 through the linear bearing 17, it is possible to ensure smooth movement of the movable member 11 on the rail 16.

As shown in FIG. 5 and FIG. 9, in some embodiments, the bending device 1 further includes a negative pressure member 18 in communication with a surface of the bending part 111 close to the pressure applying member 13.

The negative pressure member 18 is also known as a gas extraction device. When the negative pressure member 18 is in communication with a surface of the bending part 111 close to the pressure applying member 13, it is possible to create a negative pressure environment on the surface of the bending part 111 close to the pressure applying member 13, so as to adsorb the body part 21 of the to-be-bent workpiece 2 onto the bending part 111, further improving the positioning accuracy of the to-be-bent workpiece 2.

In some embodiments, the negative pressure member 18 may also be a vacuum device, creating the vacuum environment on the surface of the bending part 111 close to the pressure applying member 13, thereby enhancing the adsorption capacity of the negative pressure member 18 and strengthening the reliability of the adsorption fixation between the body part 21 and the bending part 111.

As shown in FIG. 5, FIG. 6, and FIG. 9, in some embodiments, the movable member 11 is further provided with a communicating passage 115, one end of the communicating passage 115 is in communication with the negative pressure member 18, and the other end thereof is in communication with the surface of the bending part 111 close to the pressure applying member 13.

The communicating passage 115 may be a round or rectangular through-hole, which is not limited in the present disclosure. In some embodiments, there is provided a plurality of communicating passages 115, and the plurality of communicating passages 115 are uniformly distributed on the surface of the bending part 111 close to the pressure applying member 13, which on one hand may increase the adsorption capacity of the negative pressure member 18, and on the other hand may allow the body part 21 to be evenly stressed, thereby avoiding damage to the body part 21.

By providing the communicating passage 115 on the movable member 11, it is possible to reduce the number of pipes laid, decreasing the volume and footprint of the bending device 1.

As shown in FIG. 2 and FIG. 7, in some embodiments, the bending device 1 further includes a limiting member 19, which is configured to limit movement of the movable member 11 away from the first direction X.

As shown in FIG. 2, in some embodiments, the limiting member 19 includes a first limiting part 191 and a second limiting part 192. The first limiting part 191 is fixedly connected to the movable member 11, and is provided with a first projection that protrudes in the direction towards the limiting member 19; one end of the second limiting part 192 is fixedly connected to the base 14, the other end is provided with a second projection that protrudes in the direction towards the movable member 11, and the surface of the second protrusion facing away from the pressure applying member 13 abuts against the surface of the first protrusion close to the pressure applying member 13, thereby restricting the movement of the movable member 11 away from the first direction X.

As shown in FIG. 7, in some embodiments, the limiting member 19 is a stop block, which is fixed at the end of the rail 16 away from the base 14 and abuts against the side surface of the linear bearing 17 or the movable member 11 close to the pressure applying member 13, thereby restricting the movement of the movable member 11 away from the first direction X.

It should be noted that the above two methods for limiting the movement of the movable member 11 away from the first direction X can be used simultaneously or separately, which is not limited in the present disclosure.

As shown in FIG. 2 and FIG. 7, in some embodiments, the movable member 11 further includes a mount part 113, which is provided with a clearance hole 114 where the fixed member 12 is provided.

By providing the clearance hole 114, it is possible to allow the movable member 11 to move along the first direction X without being blocked by the fixed member 12.

In some embodiments, the rail may be provided on the mount part 113.

As shown in FIG. 1, another aspect of the present disclosure provides a floating bending apparatus, which includes a bending device 1 and a floating device 3, with the floating device 3 connected to the pressure applying member 13.

The floating device 3 refers to a device capable of moving in any direction in a plane perpendicular to the first direction X. By connecting the floating device 3 to the pressure applying member 13, it is possible to allow the pressure applying member 13 to float in any direction in the plane perpendicular to the first direction X during the bending process, thereby enabling alignment of the relative positions of the pressure applying member 13 and the movable member 11, and improving the bending accuracy of the bending device 1.

Regarding the above bending device 1 and floating bending apparatus, during the bending process: the body part 21 of the to-be-bent workpiece 2 acts as a fixed end, and is fixed between the pressure applying member 13 and the bending part 111, achieving precise positioning of the to-be-bent workpiece 2 and ensuring bending accuracy. Additionally, the connection part 22 of the to-be-bent workpiece 2 serves as a free end, allowing it to extend during the bending process. This facilitates stress release, preventing cracks from forming in the to-be-bent workpiece 2 during the bending process, thereby improving the yield rate. Additionally, by connecting the floating device 3 to the pressure applying member 13, it is possible to enable the pressure applying member 13 to float during the bending process to align the relative positions of the pressure applying member 13 and the movable member 11, thereby improving the bending accuracy of the bending device 1.

Specifically, as shown in FIG. 1 to FIG. 9, during loading, the pressure applying member 13 and the movable member are in a separated state, with the movable member 11 positioned at the initial position under the constraints of the elastic member 15 and the limiting member 19. At this point, the bottom surface of the first accommodation groove 122 and the bottom surface of the second accommodation groove 112 are coplanar along the second direction Y, the to-be-bent workpiece 2 is loaded into the bending device 1 and falls into the accommodation groove, such that the body part 21 is accommodated in the first accommodation groove 122 and the connection part 22 is accommodated in the second accommodation groove 112, completing the pre-positioning of the to-be-bent workpiece 2; then, the negative pressure member 18 is started, causing the to-be-bent workpiece 2 is adsorbed and fixed in the bending device 1.

During operation, the pressure applying member 13 moves along the first direction X to approach the movable member 11, and applies pressure along the first direction X to the movable member 11, while clamping the body part 21 of the to-be-bent workpiece 2 between the pressure applying member 13 and the movable member 11. As the pressure applying member 13 continues to move along the first direction X, the body part 21 moves together with the bending part 111 along the first direction X, while the connection part 22 is bent under the restriction of the fixed member 12. Then, the pressure applying member 13 moves away from the first direction X and gradually removes the pressure applied to the movable member 11, while the movable member 11 is driven by the elastic force provided by the elastic member 15 to also move in the direction away from the first direction X, and finally stops under the limit of the limiting member 19 to return to the initial position.

During unloading, the negative pressure member 18 stops working, and the negative pressure environment on the surface of the bending part 111 close to the pressure applying member 13 disappears, allowing the to-be-bent workpiece 2 to be easily removed after being bent.

The technical features of the above embodiments can be combined arbitrarily. For the sake of brevity, not all possible combinations of the individual technical features of the above embodiments are described. However, a combination of these technical features shall be considered to be within the scope of the present specification, as long as there is no contradiction in the combination.

The above embodiments are merely expressions of a few implementations of the present disclosure described in a specific and detailed manner, and are not to be construed as limitation to the scope of the present disclosure. It is to be noted that for a person of ordinary skill in the art, various modifications and improvements could be made without departing from the principle of the present disclosure, and shall fall into the protection scope of the present disclosure. Therefore, the protection scope of the present disclosure shall be subject to the appended claims.

## Claims

1. A bending device configured for bending a to-be-bent workpiece comprising a body part and a connection part, the bending device comprises:
a movable member movable along a first direction and comprising a bending part;
a fixed member provided on one side of the bending part along a second direction, the second direction being perpendicular to the first direction; and
a pressure applying member provided corresponding to the bending part along the first direction, the body part being provided between the pressure applying member and the bending part, the connection part being provided on one side of the fixed member close to the pressure applying member.

2. The bending device according to claim 1, wherein a side surface of the fixed member close to the bending part is a first abutting surface, a surface of the pressure applying member close to the fixed member is a second abutting surface, and the first abutting surface and the second abutting surface are spaced apart.

3. The bending device according to claim 2, wherein an angle between the first abutting surface and the second direction is greater than or equal to 90°.

4. The bending device according to claim 2 or 3, wherein the shortest distance between the first abutting surface and the second abutting surface is greater than or equal to a thickness of the connection part.

5. The bending device according to any one of claims 1 to 4, wherein the fixed member is recessed along the first direction to form a first accommodation groove, and the connection part is accommodated in the first accommodation groove.

6. The bending device according to claim 5, wherein the first accommodation groove is a recessed part that tapers along the first direction.

7. The bending device according to claim 5 or 6, wherein the bending part is recessed along the first direction to form a second accommodation groove, and the body part is accommodated in the second accommodation groove.

8. The bending device according to claim 7, wherein the second accommodation groove is a recessed part that tapers along the first direction.

9. The bending device according to claim 7 or 8, wherein along the second direction, a bottom surface of the first accommodation groove and that of the second accommodation groove are coplanar.

10. The bending device according to any one of claims 5 to 9, wherein there is a circular arc transition between a bottom surface of the first accommodation groove and the first abutting surface.

11. The bending device according to any one of claims 1 to 10, further comprising a base spaced apart along the first direction from a side of the movable member facing away from the pressure applying member, with an elastic member provided between the base and the movable member.

12. The bending device according to claim 11, wherein the elastic member is a spring, one end of the spring abuts against the base, and the other end thereof abuts against the movable member.

13. The bending device according to claim 11 or 12, wherein the bending device further comprises a rail provided along the first direction, one end of the rail is fixedly connected to the base, and the other end thereof is slidably connected to the movable member.

14. The bending device according to claim 13, wherein the bending device further comprises a linear bearing, through which the movable member is slidably connected to the rail.

15. The bending device according to any one of claims 1 to 14, wherein the bending device further comprises a negative pressure member in communication with a surface of the bending part close to the pressure applying member.

16. The bending device according to claim 15, wherein the movable member is further provided with a communicating passage, one end of the communicating passage is in communication with the negative pressure member, and the other end thereof is in communication with the surface of the bending part close to the pressure applying member.

17. The bending device according to any one of claims 1 to 16, wherein the bending device further comprises a limiting member, which is configured to limit movement of the movable member away from the first direction.

18. The bending device according to any one of claims 1 to 17, wherein the movable member further comprises a mount part, which is provided with a clearance hole accommodating the fixed member.

19. A floating bending apparatus, comprising:
the bending device according to any one of claims 1 to 18; and
a floating device connected to the pressure applying member.
